# EUROPÄISCHE PATENTSCHRIFT

(11) **EP 0 603 625 B1**
(45) Veröffentlichungstag und Bekanntmachung des Hinweises auf die Patenterteilung: **07.04.1999**
(21) Anmeldenummer: 93119639.8
(22) Anmeldetag: 06.12.1993
(51) Int. Cl.: B23D 49/10

(54) **Vorrichtung zum Ablängen von Hohlprofilen**
Device for cutting at length hollow structural members
Dispositif pour la coupe en longueur de profilés creux

(30) Priorität: 19.12.1992 DE 9217392 U
(43) Veröffentlichungstag der Anmeldung: 29.06.1994
(73) Patentinhaber: Schefe, Dietmar, D-88662 Überlingen (DE)
(72) Erfinder: Schefe, Dietmar, D-88662 Überlingen (DE)
(74) Vertreter: Engelhardt, Guido, Dipl.-Ing.

(56) Entgegenhaltungen:
- DE-U- 1 676 058
- FR-A- 2 579 923
- US-A- 2 003 619
- US-A- 2 111 468

## Beschreibung

Die Erfindung bezieht sich auf eine Vorrichtung zum Ablängen von Hohlprofilen, insbesondere von Kanalprofilen aus Stahlblech für Brüstungskanäle gemäß dem Oberbegriff des Patentanspruches 1.

Zur abgedeckten Verlegung von elektrischen Versorgungsleitungen werden mehr und mehr aus Hohlprofilen hergestellte Brüstungskanäle verwendet. Derartige aus Kunststoff oder Aluminium bestehende Hohlprofile, die in großen Längen angeliefert werden, können zwar ohne weiteres auf der jeweiligen Baustelle mit einer Handkreissäge ohne Schwierigkeiten und in kurzer Zeit auf das erforderliche Maß abgesägt werden, diese Profile sind aber verhältnismäßig teuer, so daß aus Kostengründen oftmals der Einbau von aus Stahlblech gefertigten Hohlprofilen gewünscht wird.

Zum Ablängen von Hohlprofilen aus Stahlblech ist aber, um eine exakte Schnittkante zu erhalten, eine mit einem feinzahnigen Sägeblatt bestückte Bandsäge notwendig, die meist stationär in einer Werkstatt aufgestellt ist und nicht ohne weiteres auf eine Baustelle verbracht werden kann. Die für Brüstungskanäle vorgesehenen Hohlprofile sind demnach in eine räumlich entfernte Werkstatt zu bringen und dort mit Hilfe der Bandkreissäge auf Maß abzusägen. Dies ist nicht nur sehr zeitaufwendig und damit lohnintensiv, sondern dabei treten vielfach auch Bearbeitungsfehler auf, so daß auf der Baustelle zusätzliche Nacharbeiten unumgänglich sind. Und beim Ablängen eines aus Stahlblech gefertigten Hohlprofiles von Hand, in dem z.B. mittels einer Stichsäge die einzelnen Wände des Profils nacheinander durchgesägt werden, ist eine an allen Wänden gleich verlaufende Schnittkante nicht oder nur mit einem außerordentlich großen Geschick zu bewerkstelligen. Hohlprofile aus Stahlblech werden daher aufgrund der bei deren Bearbeitung auftretenden Schwierigkeiten nur selten verwendet.

In der US-A-2 003 619 ist eine Vorrichtung zum Befestigen eines Hohlprofiles aus elastischem Metall bekannt, die eine Spanneinrichtung zum Einspannen der Hohlproflle aufweist. Die Spanneinrichtung ist hierbei mit einem Führungsschlitz zur Aufnahme eines von Hand betätigbaren Sägeblattes versehen, mittels dem das das in die Spanneinrichtung eingeführte Hohlprofil an dieser Stelle abgeschnitten werden kann.

Bei einer derartigen Anordnung hat es sich als nachteilig gezeigt, daß durch den Führungsschlitz zur Aufnahme des Sägeblattes das eingeführte und hin- und herbewegte Sägeblatt nur unzureichend geführt ist, so daß an der Schnittstelle des Hohlprofils im Querschnitt Unebenheiten entstehen können. Die Führung des Sägeblattes gewährleistet also nicht einen sauberen Schnitt durch das Hohlprofil.

Aufgabe der Erfindung ist es demnach, eine Vorrichtung zum Ablängen von Hohlprofilen zu schaffen, mittels der es auf sehr einfache Weise und in kurzer Zeit möglich ist, ein aus Stahlblech bestehendes Hohlprofil mit einem Handarbeitsgerät, beispielsweise einer Stichsäge, auf einer Baustelle maßgenau abzulängen, ohne daß dabei ein Verlaufen des Werkzeuges in Kauf zu nehmen ist. Vielmehr soll erreicht werden, daß das Werkzeug während des Schneidvorganges zuverlässig geführt ist und daß in einem Arbeitsgang alle Wände des Hohlprofils durchtrennt werden können. Der dazu erforderliche Bauaufwand soll gering gehalten werden, so daß auch eine wirtschaftliche Fertigung möglich ist, auch soll die Vorrichtung problemlos auf eine Baustelle mitzunehmen und nur von einer Person bedient werden können, eine ständige Einsatzbereitschaft soll demnach bei einfacher Handhabung stets gegeben sein.

Gemäß der Erfindung ist die Vorrichtung zum Ablängen von Hohlprofilen, mittels der dies zu erreichen ist, dadurch gekennzeichnet, daß das Führungsglied durch zwei an der Spanneinrichtung angebrachten im Abstand gehaltenen, vorzugsweise achssenkrecht zu dem abzulängenden Hohlprofil verlaufenden und winkelförmig gestalteten Schienen gebildet ist, wobei jede Schiene einen Schlitz aufweist, die zur Aufnahme des Sägeblattes in einer gemeinsamen Ebene angeordnet sind.

Vorteilhaft ist es ferner, die Spanneinrichtung aus zwei gegeneinander verstellbar angeordneten vorzugsweise winkelförmig gestalteten Spannplatten zu bilden, zwischen denen das abzulängende Hohlprofil einspannbar ist, und das Führungsglied als Rahmen zu gestalten, in dessen in der Ebene der Spannplatten angeordnete Schenke jeweils ein Schlitz zur Aufnahme der Sägeblattes eingearbeitet ist.

Angebracht ist es des weiteren, eine oder beide Schienen bzw. die Schenkel des U-förmigen Rahmens mit einer Einführschräge und/oder ganz oder teilweise mit einer Beschichtung zu versehen und an eine der Spannplatten der Spanneinrichtung eine plattenförmige Auflage zu befestigen, an der das Führungsglied mit der zugeordneten Schiene bzw. dem zugeordneten Schenkel an einer Stirnseite anliegt.

Wird eine Vorrichtung zum Ablängen von Hohlprofilen gemäß der Erfindung ausgebildet, in dem eine auf diese einwirkende Spanneinrichtung mit einem Führungsglied versehen wird, das zwei einander gegenüberliegend angeordnete in einer Ebene verlaufende Führungsschlitze aufweist, so ist es problemlos möglich, während eines Sägevorganges das Sägeblatt einer von Hand verstellbaren Stichsäge exakt zu führen, so daß eine einwandfreie gleichmäßige Schnittkante zu erzielen ist. Ein Verlaufen des Sägeblattes ist durch dessen Führung auf zwei Seiten des Hohlprofils nahezu ausgeschlossen, fehlerhafte Bearbeitungen auch von aus Stahlblech gefertigten Hohlprofilen sind demnach nicht in Kauf zu nehmen. Vielmehr können diese nahezu von jedermann auf einer Baustelle ohne Schwierigkeiten maßhaltig und winkelig abgelängt werden.

Da die vorschlagsgemäße Vorrichtung nur aus wenigen einfach gestalteten Bauteilen besteht, ist diese auch auf wirtschaftliche Weise herzustellen und baut nicht groß, eine Mitnahme auf Baustellen ist somit ohne weiteres möglich. Durch die anmeldungsgemäße Vorrichtung zum Ablängen von Hohlprofilen wird es demnach bei einfacher Handhabung ermöglicht, Hohlprofile aus Stahlblech vor Ort ohne großen Aufwand zu bearbeiten, so daß auch Brüstungskanäle kostengünstig aus derartigen Hohlprofilen hergestellt werden können.

In der Zeichnung ist ein Ausführungsbeispiel der gemäß der Erfindung ausgebildeten Vorrichtung zum Ablängen von Hohlprofilen dargestellt, das nachfolgend im einzelnen erläutert ist. Hierbei zeigt:
- Figur 1: die Vorrichtung in Vorderansicht während eines Arbeitsvorganges mit einem eingespannten Hohlprofil,

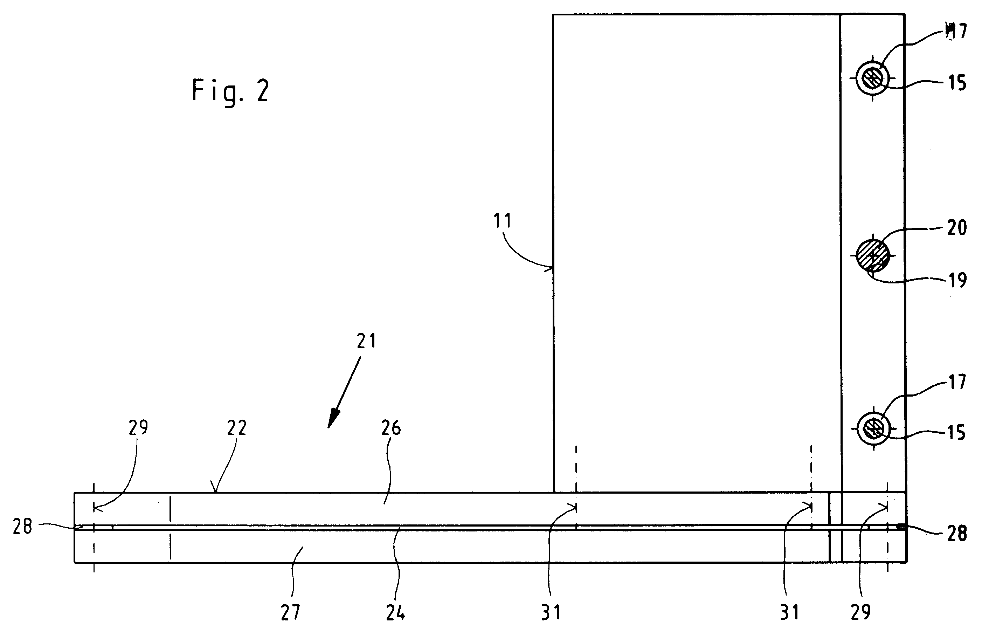

- Figur 2: einen Schnitt nach der Linie II - II der Figur 1
und
- Figur 3: die Vorrichtung nach Figur 1 in Seitenansicht, in einem vergrößerten Maßstab.

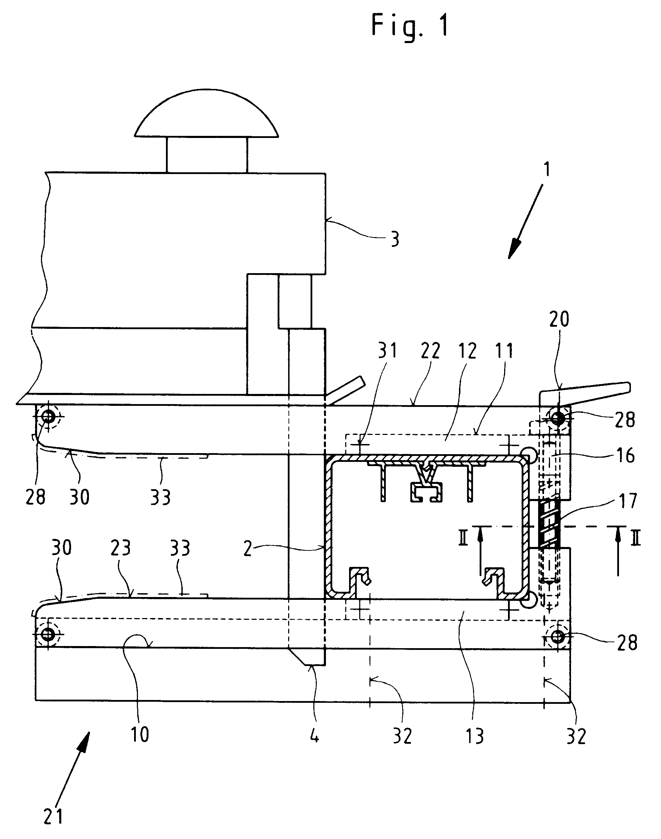

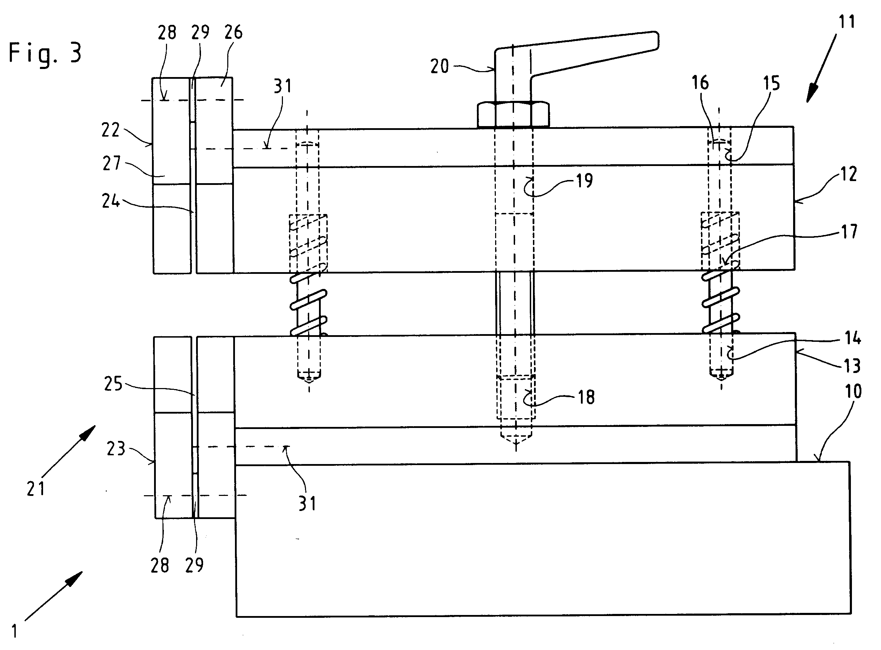

Die in den Figuren 1 und 3 dargestellte und jeweils mit 1 bezeichnete Vorrichtung dient zum maßgenauen winkeligen Ablängen eines Hohlprofils 2 mittels eines von Hand betätigten Werkzeuges, z. B. einer Stichsäge 3, und besteht im wesentlichen aus einer Spanneinrichtung 11 zur Halterung des Hohlprofils 2 während dessen Bearbeitung und einem Führungsglied 21, mittels dem das Sägeblatt 4 der Stichsäge 3 beim Sägevorgang oberhalb und unterhalb des Hohlprofils 2 exakt geführt ist. Ein Verlaufen des Sägeblattes 4 ist dadurch nahezu ausgeschlossen, eine saubere Schnittkante ist vielmehr durch die Führung des Sägeblattes 4 gewährleistet.

Die Spanneinrichtung 11 besteht, wie dies insbesondere der Figur 3 zu entnehmen ist, aus zwei winkelig gestalteten Spannplatten 12 und 13, die somit das Hohlprofil 2 teilweise umgreifen und die zu dessen Einspannung gegeneinander verstellbar sind. Dazu sind in zwei in die Spannplatte 13 eingearbeitete Bohrungen 14 Führungsbolzen 16 eingesetzt, die in die Spannplatte 12 eingearbeitete Bohrungen 15 eingreifen, so daß die Spannplatte 12 auf diesen entgegen der Kraft von ebenfalls in die abgestuft ausgebildeten Bohrungen 15 eingesetzten Federn 17 in Richtung des Hohlprofiles 2 verstellbar gehalten ist. Und mittels einer mittig angeordneten Spannschraube 20, die in eine in der Spannplatte 13 vorgesehenen Gewindebohrung 18 eingreift und durch eine in die Spannplatte 12 eingearbeitete Bohrung 19 hindurchgeführt ist, sind die beiden Spannplatten 12 und 13 gegeneinander verstellbar, so daß das Hohlprofil 2 zwischen diesen eingespannt werden kann und während des Arbeitsvorganges sicher gehalten ist.

Das Führungsglied 21 ist durch zwei Schienen 22 und 23 gebildet, die parallel zueinander angeordnet und mittels Schrauben 31 fest mit den Spannplatten 12 bzw. 13 der Spanneinrichtung 11 verbunden sind. Die Schienen 22 und 23, die bei dem gezeigten Ausführungsbeispiel rechtwinklig zu dem einzuspannenden Hohlprofil 2 von den Spannplatten 12 und 13 abstehen, weisen jeweils einen in einer gemeinsamen Ebene verlaufenden Schlitz 24 bzw. 25 auf, in denen das Sägeblatt 4 der Stichsäge 3, wie dies in Figur 1 gezeigt ist, während eines Sägevorganges geführt ist.

Die Schienen 22 und 23 bestehen jeweils aus zwei Leisten 26 und 27, zwischen denen in den Endbereichen Distanzstücke 28 eingesetzt und die durch Schrauben 29 fest miteinander verbunden sind. Auf diese Weise sind die Schienen 22 und 23 auf wirtschaftliche Weise herzustellen. Des weiteren sind die Schienen 22 und 23 jeweils mit einer Einführschräge 30 versehen und können, wie dies in Figur 1 strichpunktiert eingezeichnet ist, um Beschädigungen des Hohlprofils 2 zu vermeiden, mit einer Beschichtung 33 ausgestattet werden. Und um die Vorrichtung 1 betriebssicher abstützen zu können, ist an der Spannplatte 13 der Spanneinrichtung 11 eine Auflage 10 in Form einer Platte mittels Schrauben 32 befestigt.

## Patentansprüche

1. Vorrichtung (1) zum Ablängen von Hohlprofilen (2), insbesondere von Kanalprofilen aus Stahlblech für Brüstungskanäle, mittels einer von Hand zu führenden Stichsäge (3) oder eines ähnlichen Werkzeuges, wobei die Vorrichtung (1) eine Spanneinrichtung (11) zur Halterung des Hohlprofils (2) und ein mit dieser verbundenes, an das abzulängende Hohlprofil (2) anlegbares Führungsglied (21) aufweist,
dadurch gekennzeichnet,
daß das Führungsglied (21) durch zwei an der Spanneinrichtung (11) angebrachten, im Abstand gehaltenen vorzugsweise achssenkrecht zu dem abzulängenden Hohlprofil (2) verlaufenden, und winkelförmig gestalteten Schienen (22, 23) gebildet ist, wobei jede Schiene (22, 23) einen Schlitz (24 bzw. 25) aufweist, die zur Aufnahme des Sägeblattes (4) in einer gemeinsamen Ebene angeordnet sind.

2. Vorrichtung nach Anspruch 1,
dadurch gekennzeichnet,
daß die Spanneinrichtung (11) aus zwei gegeneinander verstellbar angeordneten vorzugsweise winkelförmig gestalteten Spannplatten (12, 13) besteht, zwischen denen das abzulängende Hohlprofil (2) einspannbar ist.

3. Vorrichtung nach Anspruch 2,
dadurch gekennzeichnet,
daß das Führungsglied (21) durch einen Rahmen gebildet ist, in dessen in der Ebene der Spannplatten (12, 13) angeordnete Schenkel jeweils ein Schlitz zur Aufnahme des Sägeblattes (4) eingearbeitet ist.

4. Vorrichtung nach Anspruch 3,
dadurch gekennzeichnet,
daß eine oder beide Schienen (22, 23) bzw. die Schenkel des Rahmens mit einer Einführschräge (30) und/ oder ganz oder teilweise mit einer Beschichtung (33) versehen sind.

5. Vorrichtung nach Anspruch 3 oder 4,
dadurch gekennzeichnet,
daß an eine der Spannplatten (13) der Spanneinrichtung (11) eine plattenförmige Auflage (10) befestigt ist, an der das Führungsglied (21) mit der zugeordneten Schiene (23) bzw. dem zugeordneten Schenkel an einer Stirnseite anliegt.

6. Vorrichtung nach einem oder mehreren der vorgenannten Ansprüche 2 bis 5,
dadurch gekennzeichnet,
daß die Schienen (22, 23) jeweils durch zwei mit seitlichem Abstand zueinander angeordneten Leisten (26, 27) gebildet sind, zwischen denen in den beiden Endbereichen Distanzstücke eingesetzt sind.

## Claims

1. A device (1) for cutting at length hollow structural members (2), in particular duct structural members from sheet steel for sill-type trunking, by means of a jigsaw (3) or a similar tool which is guided by hand, the device (1) having a clamping device (11) for the purpose of holding the hollow structural member (2) and a guide element (21) which can be brought into contact with the hollow structural member (2) to be cut at length, a purpose of the guide element (21) being to accommodate the saw blade (4) of the jigsaw (3),
**characterised in that,**
the guide element (21) is formed by two rails (22, 23) fitted to the clamping device (11) which are kept at a distance from one another, preferably running at an axially perpendicular angle to the hollow structural member (2) to be cut at length and having an angled shape, each rail having a slot with the result that the slots (24, 25) for accommodating the saw blade are worked in a common plane.

2. The device in accordance with Claim 1,
**characterised in that,**
the clamping device (11) consists of two angled clamping plates (12, 13) which are arranged so they can be adjusted in relation to one another and between which the hollow structural member (2) to be cut at length can be clamped.

3. The device in accordance with Claim 2,
**characterised in that,**
the guide element (21) is formed by a frame with legs arranged in the plane of the clamping plates (12, 13) and with one slot worked into each leg for accommodating the saw blade (4).

4. The device in accordance with Claim 3,
**characterised in that,**
one or both rails (22, 23) or the legs of the frame are provided with an insertion wedge (30) and/or have a complete or partial coating (33).

5. The device in accordance with Claim 3 or 4,
**characterised in that,**
one of the clamping plates (13) of the clamping device (11) has a plate shaped support (10) fixed onto it, with the guide element (21) and associated rail (23) or associated leg being in contact with one end of the support (10).

6. The device in accordance with one or more of the aforementioned Claims 2 to 5,
**characterised in that,**
each of the rails (22, 23) are formed by two bars (26, 27) arranged at a lateral distance from one another, with spacers inserted between them in both end areas.

## Revendications

1. Dispositif (1) pour la coupe en longueur de profilés creux (2), notamment de profilés à canaux en tôle d'acier pour canaux d'appuis, moyennant une scie sauteuse actionnée manuellement (3) ou un outil similaire, le dispositif (1) comportant un équipement de serrage (11) pour le retient du profile creux (2) et un élément de guidage (21) qui est raccordé à celui-ci et applicable au profilé creux (2) à couper,
caractérisé en ce que
l'élément de guidage (21) consiste de deux glissières angulaires (22, 23) espacées l'une de l'autre, montées sur l'équipement de serrage (11) et dirigées de préférence perpendiculairement à l'axe du profilé creux (2) à couper, chacune des glissières contenant une fente (24 ou 25) disposées dans un plan commun pour recevoir la lame (4) de la scie sauteuse.

2. Dispositif d'après la revendication 1,
caractérisé en ce que
l'équipement de serrage (11) consiste de deux plaques de serrage (12, 13) de préférence angulaire, positionnées de manière réglable l'une par rapport à l'autre et entre lesquelles peut être serré le profilé creux à couper (2).

3. Dispositif d'après la revendication 2,
caractérisé en ce que
l'élément de guidage (21) est formé par un cadre dont les bras disposés dans le plan des plaques de serrage (12, 13) comportent respectivement une fente recevant la lame (4).

4. Dispositif d'après la revendication 3
caractérisé en ce que
l'une ou les deux des glissières (22, 23) ou les bras du cadre comportent un chanfrein d'introduction (30) et/ou qu'ils sont munis partiellement ou intégralement d'un recouvrement (33).

5. Dispositif d'après la revendication 3 ou 4
caractérisé en ce que
sur une des plaques de serrage (13) de l'équipement de serrage (11), il est fixé un support sous la forme d'une plaque (10) sur une face frontale de laquelle porte l'élément de guidage (21) avec la glissière assignée (23).

6. Dispositif d'après une ou plusieurs des revendications précitées 2 à 5,
caractérisé en ce que
les glissières (22, 23) sont formées respectivement par deux réglettes (26, 27) disposées à une certaine distance latérale l'une de l'autre et entre les extrémités desquelles il est monté des pièces d'écartement.
